# EUROPÄISCHE PATENTSCHRIFT

(11) **EP 1 594 329 B1**
(45) Veröffentlichungstag und Bekanntmachung des Hinweises auf die Patenterteilung: **12.03.2008**
(21) Anmeldenummer: 04010796.3
(22) Anmeldetag: 06.05.2004
(51) Int. Cl.: H04Q 7/38, H04Q 7/22

(54) **Verfahren zur Positionsbestimmung einer mobilen Station für die Nutzung eines standortabhängigen Dienstes innerhalb eines Funkkommunikationssystems, entsprechendes System und Einrichtung zur Unterstützung der Positionsbestimmung**
Method for position determination of a mobile terminal for using a location-dependent service within a radio communication system, corresponding system and appartus for supporting the location determination
Méthode de détermination de position d'un terminal mobile pour utiliser un service dépendant de la position dans un système de communication par radio, système correspondant et appareil pour supporter la détermination de position

(43) Veröffentlichungstag der Anmeldung: 09.11.2005
(73) Patentinhaber: Nokia Siemens Networks GmbH & Co. KG, 81541 München (DE)
(72) Erfinder: Bederov, Denis, 10789 Berlin (DE); Druzinic-Fiebach, Rok, Dr., 16548 Glienicke (DE); Kuipers, Martin, 13599 Berlin (DE); Paul, Michael, 89075 Ulm (DE); Schmitz, Heiko, Dr., 13347 Berlin (DE)

(56) Entgegenhaltungen:
- WO-A-02/063909
- US-A1- 2003 187 984

## Beschreibung

Verfahren zur Positionsbestimmung einer mobilen Station für die Nutzung eines standortabhängigen Dienstes innerhalb eines Funkkommunikationssystems, entsprechendes System und Einrichtung zur Unterstützung der Positionsbestimmung

Die Erfindung betrifft ein Verfahren zur Positionsbestimmung einer mobilen Station für die Nutzung eines standortabhängigen Dienstes innerhalb eines Funkkommunikationssystems, ein System zur Positionsbestimmung sowie eine Einrichtung zur Unterstützung der Positionsbestimmung.

In Funkkommunikationssystemen erfolgt eine Kommunikation mit Teilnehmern des Systems über Signale, die mittels elektromagnetischer Wellen übertragen werden. Daher ist ein derartiges System auch für eine Kommunikation mit mobilen Stationen geeignet. Eine Art von Funkkommunikationssystemen mit mobilen Stationen sind die so genannten Mobilfunksysteme, die in der Regel zellular aufgebaut sind, dass heißt eine Vielzahl von Funkzellen aufweisen, die jeweils von mindestens einer Basisstation versorgt werden. Bekannte Mobilfunksysteme arbeiten beispielsweise nach dem GSM (Global System of Mobile Communication)-Standard oder nach dem UMTS FDD oder TDD (Universal Mobile Telecommunication System Frequency Division Duplex oder Time Division Duplex)-Standard. In den USA sind beispielsweise der IS-95-Standard und der CDMA2000-Standard verbreitet.

In Mobilfunksystemen werden zukünftig mehr und mehr so genannte standortabhängige Dienste für die Teilnehmer des Systems zur Verfügung stehen. Standortabhängige Dienste sind solche, die dem Teilnehmer beispielsweise bestimmte Informationen zur Verfügung stellen, die nicht für alle Teilnehmer gleich sind, sondern abhängig von deren Position. Hierzu gehören beispielsweise Informationen über das lokale Wetter, Verkehrsnachrichten, Informationen über sich in der Nähe befindliche Restaurants oder Tankstellen etc.

Einige bekannte Verfahren zur Bestimmung der Position eines mobilen Teilnehmers in einem Funkkommunikationssystem basieren auf der Auswertung von Empfangsfeldstärken der empfangenen Signale. Die Messwerte der Empfangsfeldstärken einer mobilen Station werden beispielsweise zu einer Lokalisierungszentrale, dem so genannten SMLC (Serving Mobile Location Center), übertragen. Das SMLC vergleicht die Messwerte mit in einer Datenbank abgelegten Werten und bestimmt aufgrund dieses Vergleichs den wahrscheinlichsten Aufenthaltsort des mobilen Teilnehmers. Die Genauigkeit eines solchen Verfahrens kann wesentlich verbessert werden, wenn nicht nur eine Messung, sondern mehrere aufeinander folgende Feldstärkemessungen ausgewertet werden. Beispielsweise kann in GSM-Netzen fortlaufend die Empfangsfeldstärke gemessen und in einem Ringspeicher gespeichert werden, da diese Messungen für die internen Netzsteuerungsprozesse (dass heißt unabhängig von der Positionsbestimmung) ohnehin kontinuierlich benötigt werden.

Im Gegensatz zu den GSM-Netzen besteht jedoch in Mobilfunknetzen der dritten Generation wie UMTS kein Bedarf seitens der Netzsteuerung, derartige Messungen fortlaufend durchzuführen und die entsprechenden Messergebnisse zu den entsprechenden Netzeinrichtungen zu übertragen und dort zwischenzuspeichern. Um eine derartige kontinuierliche Messung und Speicherung der Messergebnisse bei solchen Mobilfunknetzen allein aus Gründen der Positionsbestimmung einzuführen, wäre ein großer Aufwand von Nöten, der zu zusätzlichen Belastungen des Netzes aufgrund der zusätzlichen Signalisierung führen würde. Wird dieser Aufwand jedoch vermieden, indem Messungen nicht kontinuierlich sondern bei Bedarf durchgeführt und die entsprechenden Ergebnisse zum Netz übertragen werden, führt dies dazu, dass die Positionsbestimmung, die mit dem Erzeugen einer entsprechenden Positionierungsaufforderung beginnt, entsprechend länger dauert.

Neben Verfahren zur Positions- bzw. Standortbestimmung, die auf Auswertung der Empfangsfeldstärken basieren, gibt es weitere Verfahren, bei denen bestimmte Betriebsdaten (so genannte assistance-Daten) vom Netz zum mobilen Endgerät gesendet werden müssen, bevor dieses die für das jeweilige Positionsbestimmungsverfahren benötigten Messungen durchführen kann und gegebenenfalls die eigene Position selbst berechnen kann. Zu diesen Verfahren gehört das so genannte assisted-GPS (Global Positioning System) sowie OTDOA (Observed Time Difference of Arrival). Wenn die genannten Daten erst dann zum Endgerät gesendet werden, nachdem eine Anfrage für die Durchführung einer Positionsbestimmung vorliegt, verzögert sich auch hier der gesamte Vorgang der Positionsbestimmung. Hinzu kommt dann noch die Zeitdauer, die für die eigentlichen Messungen der zur Positionsbestimmung erforderlichen Größen benötigt wird.

Es wäre wünschenswert, im Interesse des Nutzers eines standortabhängigen Dienstes, dass die für das Anbieten des standortabhängigen Dienstes notwendige Positionsbestimmung möglichst schnell durchgeführt werden kann, so dass deren Ergebnisse möglichst schnell vorliegen und damit auch die mit dem standortabhängigen Dienst verbundene Informationsübermittlung innerhalb möglichst kurzer Zeit durchgeführt werden kann.

Bei den letztgenannten Positionierungsverfahren, bei denen Assistance-Daten vom Netz zur mobilen Station übertragen werden müssen, wäre es möglich, dass derjenige Teil der Assistance-Daten, der nicht für einen konkreten Positionierungsvorgang speziell berechnet werden muss, periodisch als Broadcast-Nachricht durch das Netz an die Teilnehmerstationen ausgesendet wird, so dass interessierte Endgeräte diese Daten lesen und speichern können. Im Falle einer Positionsanfrage stünden diese Daten dann sofort für durchzuführende Messungen zur Verfügung. Diese Variante sorgt jedoch für zusätzliche Last auf dem Broadcast-Kanal des Mobilfunksystems und verursacht dadurch einen höheren Interferenzpegel, wodurch wiederum die Gesamtkapazität des Mobilfunksystems reduziert wird. Wollte man die Assistance-Daten zusätzlich nur einem bestimmten Nutzerkreis zur Verfügung stellen, entsteht durch die dafür notwendige Verschlüsselung der Daten und die damit zusammenhängende Schlüsselverwaltung und -verteilung ein zusätzlicher Aufwand beim Betrieb des Netzes.

Aus US 2003/187984 A1 ist ein Verfahren bekannt, das zur Einholung und Aufbereitung von Inhalt in einem Informationsverarbeitungssystem angewandt wird. Hierzu werden Kontextinformationen einem Benutzer zugeordnet, die zumindest Muster für das Benutzerverhalten, den aktuellen Aufenthaltsort sowie zukünftige Pläne und Vorlieben umfassen.

Aus WO 02/063909 A ist ein Verfahren zur Ortsbestimmung von paketdienstfähigen Funkstationen in einem Funkkommunikationssystem bekannt, in dem Positionsdaten erzeugt und gespeichert werden, ohne dass eine Anfrage zur Positionsbestimmung vorliegt.

Zur Lösung des oben beschriebenen Problems können diese beiden Dokumente jedoch nicht ausreichend beitragen.

Der Erfindung liegt die Aufgabe zugrunde, ein Verfahren zur Positionsbestimmung einer mobilen Station für die Nutzung eines standortabhängigen Dienstes innerhalb eines Funkkommunikationssystems anzugeben, bei dem sowohl dem Aspekt des Zeitaufwandes für die durchzuführende Positionsbestimmung als auch dem Aspekt der Belastung des Netzes durch zusätzliche Signalisierung Rechnung getragen wird.

Diese Aufgabe wird mit einem Verfahren gemäß Anspruch 1 sowie einem System zur Positionsbestimmung sowie einer Einrichtung zur Unterstützung einer Positionsbestimmung gemäß den nebengeordneten Patentansprüchen gelöst.

Vorteilhafte Ausführungsformen und Weiterbildungen der Erfindung sind Gegenstand von abhängigen Ansprüchen.

Beim erfindungsgemäßen Verfahren zur Positionsbestimmung wird wenigstens ein Teil der Verfahrensschritte bereits zu einem Zeitpunkt durchgeführt, zu dem ein potentieller Nutzer des standortabhängigen Dienstes eine entsprechende Positionierungsaufforderung noch gar nicht erzeugt hat. Dieser Teil der Verfahrensschritte wird als Folge einer vorhergehenden, auf den standortabhängigen Dienst bezogenen Aktion des Nutzers durchgeführt.

Hierbei wird davon ausgegangen, dass der Nutzer vor der endgültigen Entscheidung, den standortabhängigen Dienst tatsächlich in Anspruch zu nehmen und dafür die hierfür notwendige Positionsbestimmung auszulösen, in der Regel wenigstens eine Aktion ausführt, anhand derer auf eine gewisse Wahrscheinlichkeit der späteren Inanspruchnahme des standortabhängigen Dienstes geschlossen werden kann. Es ist zwar dann möglich, dass der Dienst später gar nicht in Anspruch genommen wird, so dass die bis dahin bereits durchgeführten Verfahrensschritte der Positionsbestimmung umsonst durchgeführt wurden, jedoch hat das erfindungsgemäße Verfahren gegenüber den weiter oben geschilderten Verfahren folgende Vorteile: Die vor dem Erzeugen der Positionierungsaufforderung durchgeführten Verfahrensschritte führen einerseits zu einer Verkürzung des Zeitraums zwischen Erzeugen der Positionierungsaufforderung und dem Vorliegen des entsprechenden Ergebnisses. Dieser Vorteil existiert zwar auch bei den eingangs erläuterten Verfahren in GSM-Netzen oder im Falle des periodischen Broadcast von bestimmten assistance-Daten anderer Positionierungsverfahren. Allerdings weist die Erfindung andererseits den weiteren Vorteil gegenüber diesen Verfahren auf, dass die vor dem Erzeugen der Positionierungsaufforderung durchgeführten Verfahrensschritte nicht automatisch kontinuierlich (wie bei den genannten GSM-Systemen) oder periodisch (wie im Falle der genannten Systeme mit Assistance-Daten) durchgeführt werden, sondern erst ausgelöst von der auf den standortabhängigen Dienst bezogenen Aktion des potentiellen Nutzers des standortabhängigen Dienstes. Da aus diesem Grund die Durchführung des Teils der Verfahrensschritte nur erfolgt, wenn eine gewisse Wahrscheinlichkeit für die spätere Inanspruchnahme des standortabhängigen Dienstes besteht, wird nach der Erfindung der Signalisierungsaufwand innerhalb des Funkkommunikationssystems relativ gering gehalten.

Die Erfindung ist für Positionsbestimmungsmethoden beliebiger Art verwendbar, beispielsweise für die eingangs erläuterten Verfahren, die auf der Basis von Empfangsfeldstärken oder mit Hilfe von Assistance-Daten arbeiten.

Somit bezieht sich der Teil der Verfahrensschritte zur Positionsbestimmung, der bereits durchgeführt wird, bevor ein potentieller Nutzer des standortabhängigen Dienstes eine entsprechende Positionierungsaufforderung erzeugt, nach einer Weiterbildung der Erfindung auf die Durchführung von Messungen und/oder den Austausch von Nachrichten zwischen einer Einheit des Funkkommunikationssystem und der mobilen Station.

Dabei kann es sich bei den ausgetauschten Nachrichten um solche handeln, die von der Einheit des Funkkommunikationssystems zur mobilen Station übertragen und dort für die Durchführung von die Positionsbestimmung betreffenden weiteren Verfahrensschritten verwendet werden, wie dies beispielsweise bei den vorgenannten Assistance-Daten der Fall ist.

Die vor dem Erzeugen der Positionierungsaufforderung durchgeführten Messungen können von der mobilen Station beispielsweise selbst durchgeführt werden, wie dies beispielsweise bei den die Empfangsfeldstärke berücksichtigenden Verfahren der Fall ist.

Als potentieller Nutzer des standortabhängigen Dienstes kommt beispielsweise ein Teilnehmer des Funkkommunikationssystems in Betracht, der über die mobile Station mit dem Funkkommunikationssystem verbunden ist und die vorhergehende Aktion mittels der mobilen Station durchführt

Vorzugsweise steht dem potentiellen Nutzer des standortabhängigen Dienstes eine Bedienoberfläche für die Nutzung des Dienstes zur Verfügung und die vorhergehende Aktion des Nutzers ist die Auswahl einer ihm durch die Bedienoberfläche angebotenen Option, die sich auf den standortabhängigen Dienst bezieht. Die genannte Bedienoberfläche kann beispielsweise den Nutzer über die von ihm genutzte mobile Station oder den von ihm genutzten Computer, über den er mit dem Funkkommunikationssystem verbunden ist, zur Verfügung gestellt werden.

Nach einer anderen Ausführungsform der Erfindung kann der Nutzer jedoch auch über einen Computer mit dem Funkkommunikationssystem verbunden sein und die vorhergehende Aktion mittels des Computers durchführen. In diesem Fall unterscheidet sich der Nutzer von dem der mobilen Station zugeordneten Teilnehmer.

Eine weitere Möglichkeit ist, dass der Nutzer einer anderen mobilen Station des Funkkommunikationssystems zugeordnet ist, der zur Nutzung des standortabhängigen Dienstes eine Positionsbestimmung für die erste mobile Station auslösen will.

Nach einer Weiterbildung der Erfindung werden bei Ausbleiben einer Positionierungsaufforderung durch den Nutzer nach der Durchführung des Teils der Verfahrensschritte Ergebnisse der bereits durchgeführten Verfahrensschritte der Positionsbestimmung verworfen. Diese Weiterbildung trägt der Tatsache Rechnung, dass anhand der vom Nutzer durchgeführten Aktion, die auf den standortabhängigen Dienst bezogen ist, in der Regel nur auf einen gewissen Grad von Wahrscheinlichkeit geschlossen werden kann, mit der der Nutzer später tatsächlich den standortabhängigen Dienst in Anspruch nimmt und damit die Positionierungsaufforderung erzeugt.

Nach einer anderen Ausführungsform der Erfindung ist die vorhergehende Aktion des Nutzers die Angabe einer Kennung der mobilen Station, für die die Positionsbestimmung erfolgen soll. Über die Kennung ist die mobile Station identifizierbar. Es kann davon ausgegangen werden, dass nach Angabe dieser Kennung die Wahrscheinlichkeit für die spätere Inanspruchnahme des standortabhängigen Dienstes relativ hoch ist.

Das erfindungsgemäße System zur Positionsbestimmung einer mobilen Station weist erste Mittel zum Durchführen wenigstens eines Teils der Verfahrensschritte zur Positionsbestimmung auf, bereits bevor ein potentieller Nutzer eine entsprechende Positionierungsaufforderung erzeugt, und zweite Mittel zum Registrieren einer vorhergehenden, auf den standortabhängigen Dienst bezogenen Aktion des Nutzers und zum Veranlassen der ersten Mittel zum Durchführen des Teiles der Verfahrensschritte als Folge der Aktion.

Die erfindungsgemäße Einrichtung zur Unterstützung der Positionsbestimmung weist Mittel zum Registrieren einer vorhergehenden, auf den standortabhängigen Dienst bezogenen Aktion des Nutzers und zum Veranlassen der Durchführung des Teiles der Verfahrensschritte als Folge der Aktion auf.

Dabei weisen das erfindungsgemäße System sowie die erfindungsgemäße Einrichtung in Ausführungsformen und Weiterbildungen entsprechende Mittel bzw. Einheiten auf, die zur Durchführung der Ausführungsformen und Weiterbildungen des erfindungsgemäßen Verfahrens erforderlich sind.

Die Erfindung wird im Folgenden anhand von den in den Figuren dargestellten Ausführungsbeispielen näher erläutert. Es zeigen:
- Figur 1: einen Ausschnitt eines Mobilfunksystems, in dem das erfindungsgemäße Verfahren durchgeführt wird,
- Figur 2: eine Ausführungsform des erfindungsgemäßen Verfahrens zur Positionsbestimmung und
- Figur 3 bis 5: Bildschirmansichten eines Computers aus Figur 1

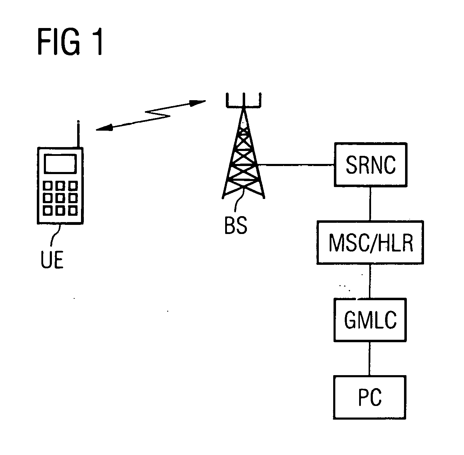

Figur 1 zeigt einen Ausschnitt eines UMTS FDD Mobilfunksystems. Die Erfindung ist jedoch auch auf beliebige andere Mobilfunksysteme oder beliebige Funkkommunikationssysteme mit mobilen Stationen, deren Position bestimmt werden soll, anwendbar. Figur 1 zeigt eine Basisstation BS des Mobilfunksystems. Das Mobilfunksystem ist zellular aufgebaut und die Basisstation BS versorgt eine der Funkzellen. Innerhalb der Funkzelle befindet sich eine mobile Station UE, die mit der Basisstation BS über Funk kommuniziert. Die Basisstation BS ist mit einem Basisstationscontroller SRNC (Serving Radio Network Controller) verbunden. Dieser ist mit einer Vermittlungseinrichtung MSC (Mobile Switching Center) verbunden, welches ein Heimatverzeichnis HLR (Home Location Register) beinhaltet. Die Vermittlungseinrichtung MSC ist über ein Gateway GMLC (Gateway Mobile Location Center) mit einem Computer PC verbunden.

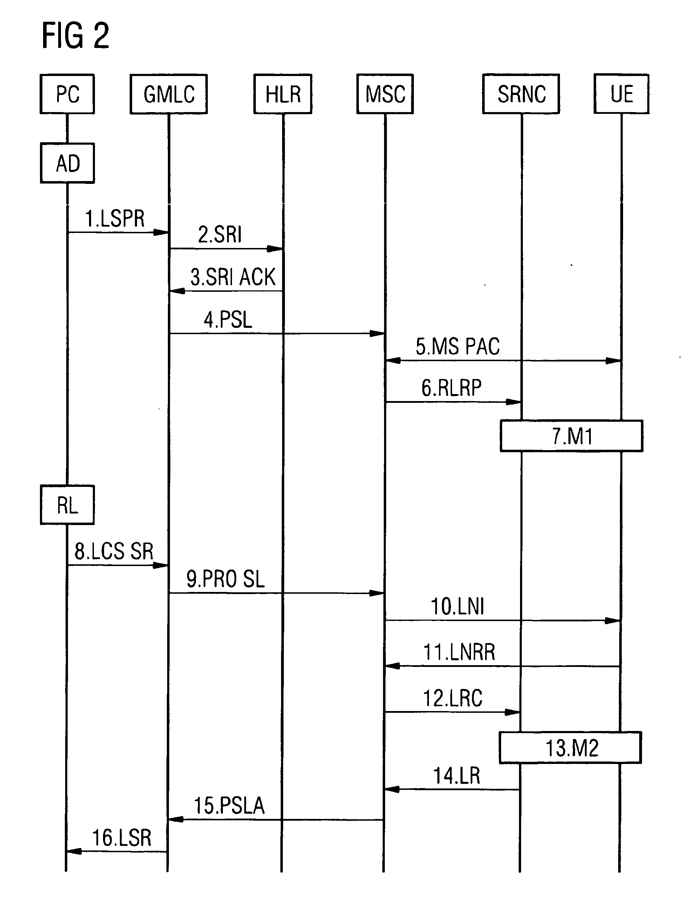

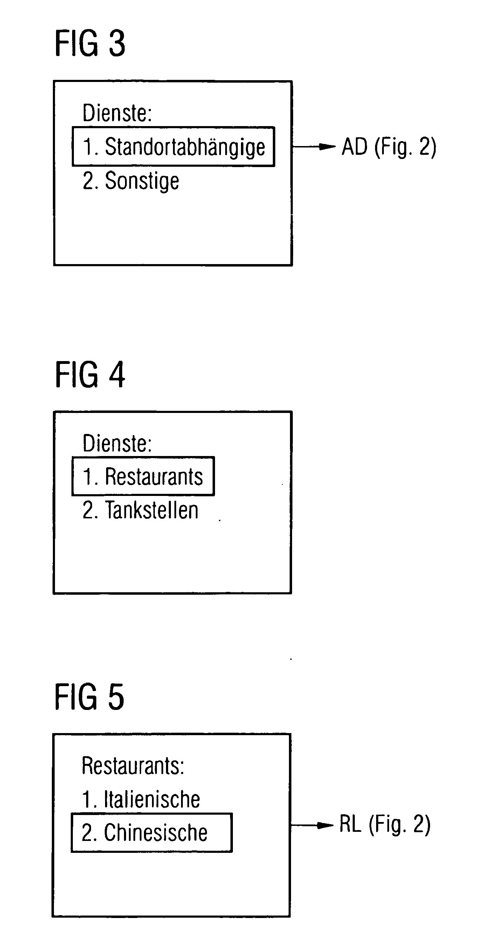

Figur 2 zeigt für ein Ausführungsbeispiel der Erfindung zwischen den in Figur 1 dargestellten Einheiten ausgetauschte Signalisierungen. Bei diesem Ausführungsbeispiel möchte ein Nutzer (Client) einen standortabhängigen Dienst für die mobile Station UE nutzen. Dieser Nutzer ist aber kein Teilnehmer des Mobilfunksystems, dem die mobile Station UE oder eine andere mobile Station des Systems zugeordnet ist (obwohl dies bei anderen Ausführungsbeispielen der Erfindung der Fall sein könnte), sondern er verwendet für die Nutzung des standortabhängigen Dienstes den Computer PC aus Figur 1. Der (potentielle) Nutzer des standortabhängigen Dienstes verwendet auf seinem Computer PC eine Software, über die ihm eine Bedienoberfläche für die Nutzung des standortabhängigen Dienstes zur Verfügung gestellt wird. Diese Bedienoberfläche weist mehrere Auswahlmenüs auf, über die er den gewünschten standortabhängigen Dienst aus einer Vielzahl von standortabhängigen Diensten auswählen kann. Hierauf wird weiter unten anhand der Figuren 3 bis 5 noch genauer eingegangen.

Der Nutzer muss zunächst am Computer PC eine entsprechende Kennung zur Identifizierung der mobilen Station UE, deren Position eventuell später bestimmt werden soll, über die Menüs der von ihm genutzten Software eingeben. Sobald der Nutzer anschließend das erste der Menüs zur möglichen Auswahl eines standortabhängigen Dienstes aufruft, über das er weitere der Menüs auswählen kann, jedoch noch bevor er sich für einen konkreten standortabhängigen Dienst entscheiden muss, wird diese Aktion des Nutzers, die bereits Teil des Auswahlprozesses des standortabhängigen Dienstes durch den Nutzer ist, von der auf dem Computer PC laufenden Software detektiert (Bezugszeichen AD in Figur 2, "Activity Detected"). Aufgrund dieser detektierten Aktion übermittelt der Computer PC an das Gateway GMLC in einem ersten Schritt eine Signalisierung LSPR (LCS Service Preparation Request), mit der dem Mobilfunknetz signalisiert wird, dass bereits jetzt, dass heißt vor Vorliegen einer konkreten Positionierungsaufforderung durch den Nutzer, ein Teil der für die Positionsbestimmung notwendigen Verfahrensschritte durchgeführt werden soll.

Durch die Auswahl des entsprechenden Menüpunktes kann mit einer gewissen Wahrscheinlichkeit darauf geschlossen werden, dass später unter Umständen eine Positionsbestimmung für die mobile Station UE durchgeführt werden soll. Feststeht dies jedoch eigentlich erst, wenn später tatsächlich ein bestimmter standortabhängiger Dienst ausgewählt wird. Das Gateway GMLC übermittelt eine zweite Signalisierung SRI (MAP Send Routing Info for LCS) an das Heimatregister HLR. Dieses bestätigt mit einer dritten Signalisierung SRI ACK (MAP Send Routing Info for LCS acknowledge). Daraufhin übermittelt das Gateway GMLC eine vierte Signalisierung PSL (MAP Prepare Subscriber Location) an die Vermittlungseinrichtung MSC. Die Signalisierungen SRI und SRI ACK im zweiten bzw. dritten Schritt in Figur 2 sind notwendig, damit anschließend das Gateway GMLC gemäß dem vierten Schritt mit derjenigen Vermittlungseinrichtung MSC kommunizieren kann, in deren Zuständigkeitsbereich sich die Mobilstation UE aufhält (dies ist das so genannte VMSC = Visitor Mobile Switching Center).

Die Vermittlungseinrichtung MSC führt mit einer fünften Signalisierung MS PAC (Mobile Station Paging, Authentication, Cyphering) ein paging der mobilen Station UE sowie eine entsprechende Authentifikation und Verschlüsselung (cyphering) der zu übertragenden Daten durch. Nach durchgeführter Authentifikation und Verschlüsselung erfolgt von der Vermittlungseinrichtung MSC eine sechste Signalisierung RLRP (RANAP Location Reporting Prepare, RANAP = Radio Access Network Application Protocol) an den Basisstationscontroller SRNC. Über diese sechste Signalisierung RLRP wird nun die Durchführung eines Teiles der Verfahrensschritte für eine Positionsbestimmung der mobilen Station UE ausgelöst. Dies erfolgt in einem siebten Schritt, wobei Nachrichten M1 zwischen dem Basisstationscontroller SRNC und der mobilen Station UE zur Vorbereitung nachfolgender Verfahrensschritte zur Positionsbestimmung der mobilen Station UE ausgetauscht werden.

Bei einem ersten Ausführungsbeispiel enthalten diese Nachrichten Messwerte der Empfangsfeldstärken an der mobilen Station UE, die diese dem Basisstationscontroller SRNC mitteilt. Bei einem zweiten Ausführungsbeispiel enthalten diese Nachrichten M1 Assistance-Daten, die für die nachfolgende Positionsbestimmung benötigt werden, und die der Basisstationscontroller SRNC der mobilen Station UE übermittelt.

Nach dem siebten Schritt erzeugt der Nutzer an seinem Computer PC nun tatsächlich eine Positionierungsaufforderung RL (Request Location) für den inzwischen von ihm über die Menüs der von ihm genutzten Software ausgewählten standortabhängigen Dienst und die entsprechende mobile Station UE. In einem achten Schritt erfolgt eine Signalisierung LCS SR (LCS Service Request) vom Computer PC an das Gateway GMLC. Die Signalisierung LSC SR folgt auf eine konkrete Positionierungsaufforderung, mit der, ausgelöst vom Nutzer, die Positionsbestimmung für die mobile Station UE angefordert wird. In einem neunten Schritt übermittelt das Gateway GMLC daraufhin an die Vermittlungseinrichtung MSC eine Signalisierung PRO SL (MAP Provide Subscriber Location), die daraufhin in einem zehnten Schritt eine Signalisierung LNI (LCS Location Notification Invoke) an die mobile Station UE übermittelt. Letztere antwortet in einem elften Schritt mit einer Signalisierung LNRR (LCS Location Notification Return Result). In einem zwölften Schritt weist die Vermittlungseinrichtung MSC den Basisstationscontroller SRNC an, die für die Positionsbestimmung noch notwendigen restlichen Verfahrensschritte durchzuführen (Signalisierung LRC, RANAP Location Reporting Control). In einem 13. Schritt werden nun Nachrichten M2 für die individuelle Positionsbestimmung der mobilen Station UE zwischen dieser und dem Basisstationscontroller SRNC ausgetauscht. Die Ergebnisse werden in einem 14. Schritt über eine Signalisierung LR (RANAP Location Report) anschließend vom Basisstationscontroller SRNC der Vermittlungseinrichtung MSC mitgeteilt. Von dort gelangen sie in einem 15. Schritt mittels einer Signalisierung PSLA (MAP Provide Subscriber Location acknowledge) zum Gateway GMLC, von wo sie in einem 16. Schritt mittels einer Signalisierung LSR (LCS Service Response) an den Computer PC übermittelt werden, wo sie dem Nutzer des standortabhängigen Dienstes zugänglich gemacht werden durch Ausgabe auf einem Bildschirm des Computers PC.

Beim hier betrachteten Ausführungsbeispiel erfolgt die konkrete Berechnung der Position der mobilen Station UE im Basisstationscontroller SRNC. Dieser übernimmt in diesem Sinne die Funktionalität eines SMLC. Bei anderen Ausführungsbeispielen kann jedoch auch ein separater SMLC vorgesehen sein, der die Positionsberechnung vornimmt. Weiterhin kann die Berechnung alternativ auch in der mobilen Station UE durchgeführt werden.

Anhand der Figuren 3 bis 5 wird jetzt noch anhand eines Ausführungsbeispiels näher erläutert, worin die zu Beginn des in Figur 2 dargestellten Verfahrens detektierte auf den standortabhängigen Dienst bezogene Aktion AD besteht und wodurch die Positionierungsaufforderung RL bzw. die entsprechende Signalisierung LCS SR durch den Nutzer erzeugt wird. Die Figuren 3 bis 5 zeigen jeweils Bildschirmansichten des Computers PC für den potentiellen Nutzer des standortabhängigen Dienstes. Gemäß Figur 3 wird dem Nutzer über ein erstes Menü die Auswahl zwischen standortabhängigen und sonstigen Diensten ermöglicht. Sobald der Nutzer über seinen Computer PC die Kategorie "standortabhängige Dienste" selektiert (in Figur 3 und den nachfolgenden Figuren ist eine derartige Selektion durch einen Kasten um die jeweils ausgewählte Option dargestellt), detektiert die Software diese Auswahlaktion und erzeugt die Signalisierung LSPR, die vom Computer PC im Gateway GMLC übermittelt wird. Dies geschieht allerdings erst, nachdem der Nutzer zuvor noch nach der Kennung der in Frage stehenden mobilen Station UE, für die eventuell ein standortabhängiger Dienst ausgewählt werden soll, durch die Software gefragt worden ist, und die Kennung daraufhin von ihm eingegeben wurde (in Figur 3 nicht dargestellt). Somit entspricht die Auswahl der Kategorie "standortabhängige Dienste" in Figur 3 zuzüglich der Eingabe der Kennung der mobilen Station UE der gemäß Figur 2 detektierten Aktion AD.

Figur 4 zeigt eine auf die Ansicht nach Figur 3 folgende Ansicht auf dem Bildschirm des Computers PC. Als mögliche auswählbare standortabhängige Dienste werden dem Nutzer wahlweise Restaurants oder Tankstellen zur Auswahl angeboten. Der Nutzer wählt gemäß Figur 4 die erste Option des Menüs (Restaurants) aus. Zeitgleich werden bereits die in Figur 2 dargestellten Verfahrensschritte 1 bis 7 durchgeführt, ohne dass der Nutzer hiervon etwas merkt. Dass heißt es werden, bereits bevor der Nutzer sich für einen konkreten standortabhängigen Dienst entschieden hat, einige Verfahrensschritte der ggf. hierfür notwendigen Positionsbestimmung durchgeführt. Dabei kann es durchaus sein, dass der Nutzer jederzeit noch die Menüführung über die Software verlässt und sich dagegen entscheidet, einen der angebotenen standortabhängigen Dienste zu nutzen. In einem solchen Fall wären die bereits durch die Durchführung des Teils der Verfahrensschritte der Positionsbestimmung erzielten Zwischenergebnisse zu verwerfen.

Nachdem der Nutzer gemäß Figur 4 die Kategorie "Restaurants" ausgewählt hat, werden ihm gemäß Figur 5 nun verschiedene Arten von Restaurants zur Auswahl angeboten, nämlich italienische oder chinesische. Er entscheidet sich nun für die chinesischen Restaurants. Da dies in diesem Ausführungsbeispiel die letzte vom Nutzer notwendige Eingabe ist, um den gewünschten konkreten standortabhängigen Dienst tatsächlich anzufordern, wird in Abhängigkeit dieser letzten Auswahl des Nutzers von der vom ihm genutzten Software die Positionsaufforderung RL aus Figur 2 generiert. Nun laufen die restlichen Verfahrensschritte 8 bis 16 aus Figur 2 ab. Als Ergebnis wird dem Nutzer schließlich über seinen Computer PC die Position der mobilen Station UE mitgeteilt, woraufhin er in der Lage ist, abhängig von dieser Position aus einer Datenbank in der Nähe der mobilen Station UE befindliche chinesische Restaurants auszuwählen (bei anderen Ausführungsbeispielen kann diese Auswahl auch automatisch durch die Software auf dem Computer PC erfolgen), die er dann mit Hilfe des Mobilfunksystems an die mobile Station UE übermittelt. Ein Teilnehmer der mobilen Station UE ist dann in der Lage, diese Information zu nutzen.

Bei anderen Ausführungsbeispielen der Erfindung kann der Nutzer des standortabhängigen Dienstes ein Teilnehmer des Funkkommunikationssystems sein, der der mobilen Station UE zugeordnet ist. Er kann dann mittels der mobilen Station UE selbst einen standortabhängigen Dienst anfordern. Weiterhin ist es auch möglich, dass der Nutzer ein Teilnehmer einer anderen mobilen Station ist, der bezüglich der (ersten) mobilen Station UE eine standortabhängigen Dienst anfordern will. In beiden Fällen sind die Figuren 2 bis 5 des oben geschilderten Ausführungsbeispiels ebenfalls weitestgehend zutreffend. Der Unterschied besteht im wesentlichen darin, dass statt des Computers PC in Figur 2 eine Software zum Einsatz kommt, die auf der jeweiligen mobilen Station des Teilnehmers läuft. Statt des Computerbildschirms wird zur Anzeige der Informationen nach den Figuren 3 bis 5 das Display der jeweiligen mobilen Station verwendet.

Die Erfindung macht sich zu Nutze, dass ein Nutzer eines standortabhängigen Dienstes in aller Regel, bevor eine konkrete Positions- bzw. Standortbestimmung vom Kommunikationssystem angefordert wird, zunächst eine bestimmte Softwareanwendung auf seinem Computer PC bzw. seiner mobilen Station UE aufrufen muss und bestimmte Eingaben zur gewünschten Art des standortabhängigen Dienstes vornehmen muss, indem z.B. ein gesuchtes Objekt (Tankstelle, Restaurant) oder eine bestimmte zu lokalisierende mobile Station UE genauer spezifiziert wird. Weitere Abfragen, die die Eingabe von Daten durch den Nutzer erfordern, schließen sich oft an, beispielsweise betreffend die Anzahl gewünschter Resultate bzw. in welcher Entfernung sich gesuchte Objekte, bezogen auf die mobile Station UE, befinden sollen. Dabei können statt der im Ausführungsbeispiel dargestellten menüartigen Navigationsmasken (Figuren 3 bis 5) auch internetbasierte Navigationsmasken zum Einsatz kommen. Zwischen der Auswahl der Seite mit den standortbezogenen Diensten entsprechend Figur 3 und dem Erzeugen der konkreten Positionierungsaufforderung RL werden bestimmte, für die Durchführung des standortabhängigen Dienstes notwendige Parameter oder Einschränkungskriterien menügesteuert vom Nutzer des Dienstes abgefragt.

Die Erfindung nutzt die Zeit zwischen dem Feststellen, dass ein potentieller Nutzer höchstwahrscheinlich beabsichtigt, einen standortbezogenen Dienst für eine bestimmte mobile Station UE in Anspruch zu nehmen, und dem tatsächlichen Erzeugen einer Positionierungsaufforderung durch diesen Nutzer, die erst durch eine entsprechende für den Nutzer verbindliche weitere Aktion des Nutzers ausgelöst wird. Der genannte Zeitraum kann bereits dafür genutzt werden, um die für die vermutlich durchzuführende Standortortbestimmung erforderlichen Messungen durchzuführen und die Messwerte in entsprechenden Netzeinrichtungen zu sammeln und zu speichern, bzw. um die benötigten assistance-Daten vom Netz an die zu lokalisierende mobile Station UE zu senden. Dadurch wird die vom Nutzer des Dienstes als Ausführungsdauer wahrgenommene Zeit zwischen dem Erzeugen der konkreten Positionierungsaufforderung und dem Bereitstellen des Ergebnisses der Lokalisierung bzw. der ihm vom standortabhängigen Dienst anhand der ermittelten Position übermittelten Informationen wesentlich verkürzt.

Um diesen Effekt weiter zu verstärken, ist es günstig, wenn alle vom Nutzer zu machenden Angaben möglichst vor dem Erzeugen der Positionierungsaufforderung abgefragt werden. Neben den Angaben, die auf die Bedürfnisse des jeweiligen standortabhängigen Dienstes abgestimmt sind, eignen sich hierfür besonders obligatorische rechtliche Hinweise, die der Nutzer lesen bzw. bestätigen soll. Derartige Abfragen sollten daher während der Durchführung der Verfahrensschritte 1 bis 7 aus Figur 2 erfolgen, so dass bereits vor dem Erzeugen der Positionierungsaufforderung RL ein Großteil der für die Positionierung notwendigen Schritte durchgeführt werden kann. Während des genannten Zeitraums könnte beispielsweise dem Nutzer auch Werbung übermittelt werden, wodurch die Verweildauer des Nutzers weiter erhöht wird und das Erzeugen der Positionierungsaufforderung RL weiter verzögert werden kann.

Es ist möglich, die erfindungsgemäße Durchführung zumindest eines Teiles der Verfahrensschritte der Positionsbestimmung bereits vor dem Erzeugen einer konkreten Positionierungsaufforderung nur für bestimmte mobile Stationen UE des Funkkommunikationssystems vorzusehen, deren zugeordnete Teilnehmer dadurch eine bevorzugte Behandlung gegenüber anderen Teilnehmern erfahren. Hierdurch kann die Signalisierung innerhalb des Kommunikationssystems relativ gering gehalten werden, auch wenn bei eventuell häufigem Ausbleiben der Positionierungsaufforderung RL die Ergebnisse der Positionsbestimmung oder entsprechende Zwischenergebnisse in einigen Fällen verworfen werden müssten.

Durch die Erfindung ist es möglich, standortbezogene Dienste für deren Nutzer attraktiver zu machen, da der Zeitraum für die für ihre Nutzung notwendige Positionsbestimmung zumindest hinsichtlich des vom Nutzer wahrnehmbaren Teils verkürzt werden kann.

## Patentansprüche

1. Verfahren zur Positionsbestimmung einer mobilen Station (UE) für die Nutzung eines standortabhängigen Dienstes innerhalb eines Funkkommunikationssystems, welches eine Vielzahl von Verfahrensschritten aufweist, **dadurch gekennzeichnet, dass**
- zumindest ein erster Teil der Verfahrensschritte als Folge einer auf den standortabhängigen Dienst bezogenen Aktion (AD) des Nutzers durchgeführt wird, und
- ein verbleibender zweiter Teil der Verfahrensschritte zur Positionsbestimmung durchgeführt wird, nachdem ein Nutzer des standortabhängigen Dienstes eine entsprechende Positionierungsaufforderung (RL) erzeugt, wobei
- dem Nutzer eine Bedienoberfläche für die Nutzung des standortabhängigen Dienstes zur Verfügung steht und
- die Aktion (AD) des Nutzers die Auswahl einer ihm über die Bedienoberfläche angebotenen Option ist.

2. Verfahren nach Anspruch 1, **dadurch gekennzeichnet, dass** bei Ausbleiben einer Positionierungsaufforderung (RL) durch den Nutzer Ergebnisse des bereits durchgeführten ersten Teils der Verfahrensschritte zur Positionsbestimmung verworfen werden.

3. Verfahren nach einem der vorstehenden Ansprüche, **dadurch gekennzeichnet, dass** der Nutzer ein Teilnehmer des Funkkommunikationssystems ist, der über die mobile Station (UE) mit dem Funkkommunikationssystem verbunden ist und die Aktion (AD) mittels der mobilen Station (UE) durchführt.

4. Verfahren nach einem der Ansprüche 1 oder 2, **dadurch gekennzeichnet, dass** der Nutzer über einen Computer (PC) und ein Gateway (GMLC) mit dem Funkkommunikationssystem verbunden ist und die Aktion (AD) mittels des Computers (PC) durchführt.

5. Verfahren nach einem der vorstehenden Ansprüche, **dadurch gekennzeichnet, dass** die Aktion (AD) des Nutzers die Angabe einer Kennung der mobilen Station (UE) ist, für die die Positionsbestimmung erfolgen soll.

6. Verfahren nach einem der vorstehenden Ansprüche, **dadurch gekennzeichnet, dass** der erste Teil der Verfahrensschritte zur Positionsbestimmung die Durchführung von Messungen und/oder den Austausch von Nachrichten (M1) zwischen einer Einheit (SRNC) des Funkkommunikationssystems und der mobilen Station (UE) betreffen.

7. Verfahren nach Anspruch 6, **dadurch gekennzeichnet, dass** die vor dem Erzeugen der Positionierungsaufforderung (RL) ausgetauschten Nachrichten (M1) von der Einheit (SRNC) des Funkkommunikationssystems zur mobilen Station (UE) übertragen werden und dort für die Durchführung des zweiten Teils der Verfahrensschritte zur Positionsbestimmung verwendet werden.

8. Verfahren nach Anspruch 6, **dadurch gekennzeichnet, dass** die vor dem Erzeugen der Positionierungsaufforderung (RL) durchgeführten Messungen (M1) von der mobilen Station (UE) durchgeführt werden.

9. System zur Positionsbestimmung einer mobilen Station (UE) für die Nutzung eines standortabhängigen Dienstes innerhalb eines Funkkommunikationssystems, **gekennzeichnet durch**
- erste Mittel (PC, UE) zum Registrieren einer auf den standortabhängigen Dienst bezogenen Aktion (AD) eines Nutzers und zum Veranlassen der ersten Mittel zum Durchführen eines ersten Teiles der Verfahrensschritte als Folge der Aktion (AD), und
- zweite Mittel (SRNC, UE) zum Durchführen eines verbleibenden zweiten Teiles der Verfahrensschritte zur Positionsbestimmung, nachdem ein Nutzer des standortabhängigen Dienstes eine entsprechende Positionierungsaufforderung (RL) erzeugt, wobei
- dem Nutzer eine Bedienoberfläche für die Nutzung des standortabhängigen Dienstes zur Verfügung steht und
- die Aktion (AD) des Nutzers die Auswahl einer ihm über die Bedienoberfläche angebotenen Option ist.

10. Einrichtung zur Unterstützung der Positionsbestimmung einer mobilen Station (UE) für die Nutzung eines standortabhängigen Dienstes innerhalb eines Funkkommunikationssystems, **gekennzeichnet durch**
erste Mittel (PC) zum Registrieren einer auf den standortabhängigen Dienst bezogenen Aktion (AD) des Nutzers und zum Veranlassen der Durchführung eines ersten Teiles von Verfahrensschritten als Folge der Aktion (AD), und
- zweite Mittel zum Durchführen eines verbleibenden zweiten Teiles der Verfahrensschritte zur Positionsbestimmung, nachdem ein Nutzer des standortabhängigen Dienstes eine entsprechende Positionierungsaufforderung (RL) erzeugt, wobei
- dem Nutzer eine Bedienoberfläche für die Nutzung des standortabhängigen Dienstes zur Verfügung steht und
- die Aktion (AD) des Nutzers die Auswahl einer ihm über die Bedienoberfläche angebotenen Option ist.

## Claims

1. Method for the localization of a mobile station (UE) for the utilization of a location-dependent service within a radio communication system, which has a multiplicity of method steps, **characterized in that**
- at least a first part of the method steps is carried out as the result of an action (AD), related to the location-dependent service, of the user,
- a remaining second part of the method steps is carried out for the localization after a user of the location-dependent service generates a corresponding localization request (RL), wherein
- an operating interface for the utilization of the location-dependent service is available to the user and a
- the action (AD) of the user is the selection of an option offered to him via the operating interface.

2. Method according to Claim 1, **characterized in that** when a localization request (RL) by the user fails to occur, results of the first part of the method steps for localization, which have already been carried out, are discarded.

3. Method according to one of the preceding claims, **characterized in that** the user is a subscriber to the radio communication system who is connected to the radio communication system via the mobile station (UE) and carries out the action (AD) by means of the mobile station (UE).

4. Method according to one of Claims 1 or 2, **characterized in that** the user is connected to the radio communication system via a computer (PC) and a gateway (GMLC) and carries out the action (AD) by means of the computer (PC).

5. Method according to one of the preceding claims, **characterized in that** the action (AD) of the user is the specification of an identification of the mobile station (UE) for which the localization is to occur.

6. Method according to one of the preceding claims, **characterized in that** the first part of the method steps for localization relates to the performance of measurements and/or the exchange of messages (M1) between a unit (SRNC) of the radio communication system and the mobile station (UE).

7. Method according to Claim 6, **characterized in that** the messages (M1) exchanged before the generating of the localization request (RL) are transmitted by the unit (SRNC) of the radio communication system to the mobile station (UE) and are used there for carrying out the second part of the method steps for the localization.

8. Method according to Claim 6, **characterized in that** the measurements (M1) performed before the generating of the localization request (RL) are performed by the mobile station (UE).

9. System for the localization of a mobile station (UE) for the utilization of a location-dependent service within a radio communication system, **characterized by**
- first means (PC, UE) for registering an action (AD), related to the location-dependent service, of a user and for causing the first means to perform a first part of the method steps as a result of the action (AD), and
- second means (SRNC, UE) for carrying out a remaining second part of the method steps for the localization after a user of the location-dependent service generates a corresponding localization request (RL), wherein
- an operating interface for the utilization of the location-dependent service is available to the user and
- the action (AD) of the user is the selection of an option offered to him via the operating interface.

10. Device for supporting the localization of a mobile station (UE) for the utilization of a location-dependent service within a radio communication system, **characterized by**
- first means (PC) for registering an action (AD), related to the location-dependent service, of the user and for causing the performance of a first part of method steps as a result of the action (AD) and
- second means for carrying out a remaining second part of the method steps for the localization after a user of the location-dependent service generates a corresponding localization request (RL), wherein
- an operating interface for the utilization of the location-dependent service is available to the user and
- the action (AD) of the user is the selection of an option offered to him via the operating interface.

## Revendications

1. Procédé pour la détermination de position d'une station mobile (UE) pour l'utilisation d'un service dépendant du site à l'intérieur d'un système de radiocommunication, qui présente une pluralité d'étapes de procédé, **caractérisé en ce que**
- au moins une première partie des étapes du procédé est effectuée comme conséquence d'une action (AD), relative au service dépendant du site, de l'utilisateur, et
- une seconde partie restante des étapes du procédé est effectuée pour la détermination de position après qu'un utilisateur du service dépendant du site génère une demande de positionnement (RL) correspondante,
- une interface utilisateur pour l'utilisation du service dépendant du site étant mise à la disposition de l'utilisateur et
- l'action (AD) de l'utilisateur étant le choix d'une option qui lui est proposé par l'interface utilisateur.

2. Procédé selon la revendication 1, **caractérisé en ce que** en cas d'absence d'une demande de positionnement (RL) par l'utilisateur, des résultats de la première partie déjà exécutée des étapes du procédé pour la détermination de position sont rejetés.

3. Procédé selon l'une quelconque des revendications précédentes,
**caractérisé en ce que** l'utilisateur est un abonné du système de radiocommunication qui est relié par la station mobile (UE) au système de radiocommunication et effectue l'action (AD) au moyen de la station mobile (UE).

4. Procédé selon l'une quelconque des revendications 1 ou 2,
**caractérisé en ce que** l'utilisateur est relié par un ordinateur (PC) et une passerelle (GMLC) au système de radiocommunication et effectue l'action (AD) au moyen de l'ordinateur (PC).

5. Procédé selon l'une quelconque des revendications précédentes,
**caractérisé en ce que** l'action (AD) de l'utilisateur est l'indication d'un code de la station mobile (UE) pour laquelle la détermination de position doit s'effectuer.

6. Procédé selon l'une quelconque des revendications précédentes,
**caractérisé en ce que** la première partie des étapes du procédé pour la détermination de position concerne l'exécution de mesures et/ou l'échange de messages (M1) entre une unité (SRNC) du système de radiocommunication et la station mobile (UE).

7. Procédé selon la revendication 6,
**caractérisé en ce que** les messages (M1) échangés avant la génération de la demande de positionnement (RL) sont transmis de l'unité (SRNC) du système de radiocommunication à la station mobile (UE) et y sont utilisés pour l'exécution de la deuxième partie des étapes du procédé pour la détermination de position.

8. Procédé selon la revendication 6,
**caractérisé en ce que** les mesures (M1) effectuées avant la génération de la demande de positionnement (RL) sont effectuées par la station mobile (UE).

9. Système de détermination de position d'une station mobile (UE) pour l'utilisation d'un service dépendant du site à l'intérieur d'un système de radiocommunication,
**caractérisé par**
- des premiers moyens (PC, UE) pour l'enregistrement d'une action (AD), relative au service dépendant du site, d'un utilisateur et pour ordonner aux premiers moyens d'exécuter une première partie des étapes du procédé comme conséquence de l'action (AD), et
- des seconds moyens (SRNC, UE) pour l'exécution d'une seconde partie restante des étapes du procédé pour la détermination de position après qu'un utilisateur du service dépendant du site génère une demande de positionnement (RL) correspondante,
- une interface utilisateur pour l'utilisation du service dépendant du site étant mise à la disposition de l'utilisateur et
- l'action (AD) de l'utilisateur étant le choix d'une option qui lui est proposée par l'interface utilisateur.

10. Dispositif pour assister la détermination de position d'une station mobile (UE) pour l'utilisation d'un service dépendant du site à l'intérieur d'un système de radiocommunication, **caractérisé par**
- des premiers moyens (PC) pour l'enregistrement d'une action (AD), relative au service dépendant du site, de l'utilisateur et pour ordonner l'exécution d'une première partie d'étapes du procédé comme conséquence de l'action (AD), et
- des seconds moyens pour l'exécution d'une seconde partie restante des étapes du procédé pour la détermination de position, après qu'un utilisateur du service dépendant du site génère une demande de positionnement (RL) correspondante,
- une interface utilisateur pour l'utilisation du service dépendant du site étant mise à la disposition de l'utilisateur et
- l'action (AD) de l'utilisateur étant le choix d'une option qui lui est proposée par l'interface utilisateur.
